# EUROPEAN PATENT APPLICATION

(11) **EP 4 278 904 A1**
(43) Date of publication of application: **22.11.2023**
(21) Application number: 22173947.7
(22) Date of filing: 18.05.2022
(51) Int. Cl.: A23L 33/10, A23G 1/36, A23G 1/42, A23G 1/44, A23L 33/105, A23L 33/12, A23L 33/15, A23L 33/155, A23L 33/175, C05C 3/00

(54) **COMPOSITIONS OF COENZYMES IN DARK SELENIUM-CHOCOLATE**

(71) Applicant: elly swiss AG, 4416 Bubendorf (CH)
(72) Inventor: Schäfer, Rolf, 4422 Arisdorf (CH); Blümel, Lisa, 18057 Rostock (DE)
(74) Representative: Braunpat AG

(57) **Abstract**

The present invention refers to food compositions comprising selenium and a set of different ingredients selected from retinyl palmitate, calcitriol, phylloquinone, tocopherol, or ubiquinol. The invention particularly refers to chocolate bars comprising selenium and the set of different ingredients. Consumption of the food compositions of the invention can reverse, reduce or slow signs of aging in a subject. The invention also relates to methods of producing cacao fruits, cacao beans, cacao mass, and cacao powder with an increased selenium content.

## Description

### FIELD OF THE INVENTION

The present invention refers to food compositions comprising selenium and a set of different ingredients selected from retinyl palmitate, calcitriol, phylloquinone, tocopherol, or ubiquinol. The invention particularly refers to chocolate bars comprising selenium and the set of different ingredients. Consumption of the food compositions of the invention can reverse, reduce or slow signs of aging in a subject. The invention also relates to methods of producing cacao fruits, cacao beans, cacao mass, and cacao powder with an increased selenium content.

### BACKGROUND OF THE INVENTION AND TECHNICAL PROBLEMS UNDERLYING THE PRESENT INVENTION

In recent years, the consumption of food supplements (e.g. vitamins, minerals including trace minerals etc.) has been on the rise. Many consumers take such food supplements to obtain the daily recommended doses of vitamins, which they do not obtain by their regular diet, or to obtain more vitamins or minerals when their body has an increased demand of vitamins or minerals, e.g. while being ill or pregnant.

Elderly individuals also may have an increased demand of vitamins or minerals, and it can be beneficial for them to take corresponding food supplements to stay healthy or to slow or reduce signs of aging.

However, food supplements as well as medical drugs are often formulated as capsules or tablets. For many people, and especially for elderly individuals, it is often difficult to swallow capsules or tablets.

Thus, there was a need in the prior art for formulations of food supplements that can be easily swallowed.

The present inventors have been able to prepare a food composition in the form of a chocolate bar that is melting nicely when swallowed and contains natural cacao plant-based active ingredients. The food compositions developed by the present inventors surprisingly have a beneficial anti-aging effect on subjects consuming the food compositions, as demonstrated by a reduction of signs of aging in the subjects' facial skin.

### SUMMARY OF THE INVENTION

In a first aspect, the present invention is directed to a food composition having a selenium content of at least about 4 µg/g, and further comprising one or more isolated ingredients selected from the group consisting of retinyl palmitate, calcitriol, phylloquinone, tocopherol, and ubiquinol.

In a second aspect, the present invention is directed to a non-therapeutic use of the food composition according to the first aspect for reversing, reducing or slowing one or more signs of aging in a subject.

In a third aspect, the present invention is directed to a method for producing cacao seeds with an enhanced selenium content, the method comprising:
(a) cultivating a cacao tree;
(b) fertilizing the tree with ammonium selenite;
(c) waiting until one or more cacao pods are ready for harvest;
(d) harvesting one more cacao pods; and
(e) isolating cacao seeds from the one or more harvested cacao pods.

In a fourth aspect, the present invention is directed to a method for producing cacao mass with an enhanced selenium content, the method comprising the steps:
(i) carrying out the method according to the third aspect; and
(ii) preparing cacao mass from the cacao seeds obtained in step (e).

In a fifth aspect, the present invention is directed to a method for producing a chocolate with an enhanced selenium content, the method comprising the steps:
(A) carrying out the method according to the fourth aspect; and
(B) preparing a chocolate using the cacao mass obtained in step (ii).

In a sixth aspect, the present invention is directed to a chocolate produced by the method according to the fifth aspect.

### DETAILED DESCRIPTION OF THE INVENTION

Before the present invention is described in detail below, it is to be understood that this invention is not limited to the particular methodology, protocols and reagents described herein as these may vary. It is also to be understood that the terminology used herein is for the purpose of describing particular embodiments only, and is not intended to limit the scope of the present invention which will be limited only by the appended claims. Unless defined otherwise, all technical and scientific terms used herein have the same meanings as commonly understood by one of ordinary skill in the art.

### Definitions:

As used herein, "isolated" means separated from other components of (a) a natural source, such as a plant or animal cell or cell culture, or (b) a synthetic organic chemical reaction mixture. For example, the present disclosure refers to isolated coenzymes, such as retinyl palmitate, calcitriol, phylloquinone, tocopherol, or ubiquinol. The fact that these coenzymes are "isolated" means that these coenzymes have either been separated from other biological molecules (e.g. when the coenzymes had been produced in cell culture) or from organic chemicals (e.g. when the coenzymes had been produced by organic synthesis). An "isolated" compound recited in the present disclosure is preferably "purified".

As used herein, "purified" means that when isolated, the isolate contains at least 95%, or preferably at least 98%, of a compound by weight of the isolate.

As used herein, the term "about" refers to numerical values ranging from 5% below the indicated numerical value to 5% above the indicated numerical value. For example, a concentration of *"about 1.0 mg*/*g"* encompasses a concentration ranging from 0.95 mg/g to about 1.05 mg/g.

In the context of the present invention, the expression *"dark chocolate"* refers to a chocolate containing at least 60% cocoa solids, preferably at least 70% cocoa solids, more preferably at least 80% cocoa solids. The term *"cocoa mass"* (also termed *"cocoa liquor"*) includes both cocoa solids and cocoa butter. *"Cocoa powder"* is the dried powdered form of cocoa solids.

The spellings *"cacao"* and *"cocoa"* are used interchangeably herein.

In the context of the present invention, the term "spot" refers to brown or red skin marks, distinguishable by the distinct colour and contrast from the background skin tone. Spots vary in size and shape, and are normally visible to the naked eye.

In the context of the present invention, the term "brown spot" refers to pigmentation and discoloration on and beneath the surface of the skin.

In the context of the present invention, "UV spots" are visible when the subject's skin is illuminated by UV light but are not visible when the skin is illuminated by visible light. The absorption of UV light by epidermal melanin just below the skin surface results in the display and detection of UV spots that can result from sun damage.

In the context of the present invention, the term "pores " refers to circular surface openings of sweat gland ducts. Due to shadowing, enlarged pores appear darker than the surrounding skin tone and are identified by the darker colour and circular shape.

In the context of the present invention, the term "wrinkles" refers to furrows, folds or creases in the skin that can increase as a result of sun exposure and are associated with a decrease in skin elasticity.

### Embodiments of the Invention:

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

In a first aspect, the present invention is directed to a food composition having a selenium content of at least about 4 µg/g, and further comprising one or more isolated ingredients selected from the group consisting of retinyl palmitate, calcitriol, phylloquinone, tocopherol, and ubiquinol.

The fact that the one or more ingredients selected from the group consisting of retinyl palmitate, calcitriol, phylloquinone, tocopherol, and ubiquinol were **isolated** means that these ingredients have been purposively added to the food composition as isolated (preferably purified) compounds and were not present before in the food composition or at least were not present before in the food composition in the desired concentration.

In one embodiment of the first aspect, the food composition has a selenium content in the range between about 4 µg/g and about 8 µg/g, preferably about 5 µg/g.

In one embodiment of the first aspect, the food composition comprises two or more (preferably three or more, more preferably four or more, and most preferably all five) isolated ingredients selected from the group consisting of retinyl palmitate, calcitriol, phylloquinone, tocopherol, and ubiquinol.

In one embodiment of the first aspect, the one or more (preferably two or more, more preferably three or more, even more preferably four or more, and most preferably all five) isolated ingredients selected from the group consisting of retinyl palmitate, calcitriol, phylloquinone, tocopherol, and ubiquinol are purified.

In one embodiment of the first aspect,
(i) retinyl palmitate is present in the food composition in a concentration range between about 0.1 mg/g and about 0.2 mg/g; and/or
(ii) calcitriol is present in the food composition in a concentration range between about 2.5 µg/g and about 5 µg/g; and/or
(iii) phylloquinone is present in the food composition in a concentration range between about 1.1 µg/g and about 10 µg/g; and/or
(iv) tocopherol is present in the food composition in a concentration range between about 0.75 mg/g and about 1.25 mg/g; and/or
(v) ubiquinol is present in the food composition in a concentration range between about 2.5 mg/g and about 10 mg/g.

In one embodiment of the first aspect, the food composition further comprises one or more isolated coenzymes selected from the group consisting of panthenol, biotin, riboflavin, NAD, cobalamine, niacin, and folic acid. In a particular embodiment, the one ore more coenzymes are purified.

In analogous manner as explained above with respect to the added ingredients, the fact that the one or more coenzymes were **isolated** means that these coenzymes have been purposively added to the food composition as isolated (preferably purified) coenzymes and were not present before in the food composition or at least were not present before in the food composition in the desired concentration.

In one embodiment of the first aspect, the food composition further comprises one or more isolated amino acids selected from the group consisting of histidine, leucine, isoleucine, valine, lysine, methionine, phenylalanine, threonine, and cysteine. In a particular embodiment, the one or more amino acids are purified.

In analogous manner as explained above with respect to the added ingredients, the fact that the one or more amino acids were **isolated** means that these amino acids have been purposively added to the food composition as isolated (preferably purified) amino acids and were not present before in the food composition or at least were not present before in the food composition in the desired concentration.

In one embodiment of the first aspect, the food composition is chocolate, preferably dark chocolate.

In one embodiment of the first aspect, the chocolate is portioned as a chocolate bar of 5 grams or 10 grams.

In a particular embodiment of the present invention, the food composition is a special Dark Selenium-Chocolate (78%) containing - *inter alia* - the following natural cacao plant-based active ingredients: Selenium, which is a strong antioxidant and cofactor of a transreductase slowing down oxidation of DNA and telomere degradation of the chromosome (which is part of the aging process); tryptophan, which stimulates serotonin, known as the Happiness Hormone and flavonoides, which are powerful antioxidants. The taste of the dark chocolate as carrier with all active ingredients dissolved at low concentrations is unchanged and very nice.

In a second aspect, the present invention is directed to a non-therapeutic use of the food composition according to the first aspect for reversing, reducing or slowing one or more signs of aging in a subject.

Alternatively, the second aspect of the invention can also be worded as being directed to a method for reversing, reducing or slowing one or more signs of aging in a subject, the method comprising administering the food composition according to the first aspect to a subject in need thereof.

In one embodiment of the second aspect, the one or more signs of aging are selected from the group consisting of:
- wrinkles, in particular wrinkles in the face;
- spots;
- UV spots;
- brown spots;
- pore size; and
- skin roughness.

In one embodiment of the second aspect, the food composition is to be administered at a dose of about 5 grams twice daily. In a particular embodiment, the food composition is to be administered for a time-period of at least 1 month, preferably at least 2 months, and more preferably at least 3 months.

In a third aspect, the present invention is directed to a method for producing cacao seeds with an enhanced selenium content, the method comprising:
(a) cultivating a cacao tree;
(b) fertilizing the tree with ammonium selenite;
(c) waiting until one or more cacao pods are ready for harvest;
(d) harvesting one more cacao pods; and
(e) isolating cacao seeds from the one or more harvested cacao pods.

In a fourth aspect, the present invention is directed to a method for producing cacao mass with an enhanced selenium content, the method comprising the steps:
(i) carrying out the method according to the third aspect; and
(ii) preparing cacao mass from the cacao seeds obtained in step (e).

In one embodiment of the fourth aspect, the method comprises the further step(s) of:
(iii) preparing cacao solids from the cacao mass obtained in step (ii); and
(iv) optionally preparing cacao powder from the cacao solids obtained in step (iii).

In a fifth aspect, the present invention is directed to a method for producing a chocolate with an enhanced selenium content, the method comprising the steps:
(A) carrying out the method according to the fourth aspect; and
(B) preparing a chocolate using the cacao mass obtained in step (ii) or the cacao solids obtained in step (iii) or the cacao powder obtained in step (iv).

In a sixth aspect, the present invention is directed to a chocolate produced by the method according to the fifth aspect.

The following figures and examples are merely illustrative of the present invention and should not be construed to limit the scope of the invention as indicated by the appended claims in any way.

### BRIEF DESCRIPTION OF THE FIGURES

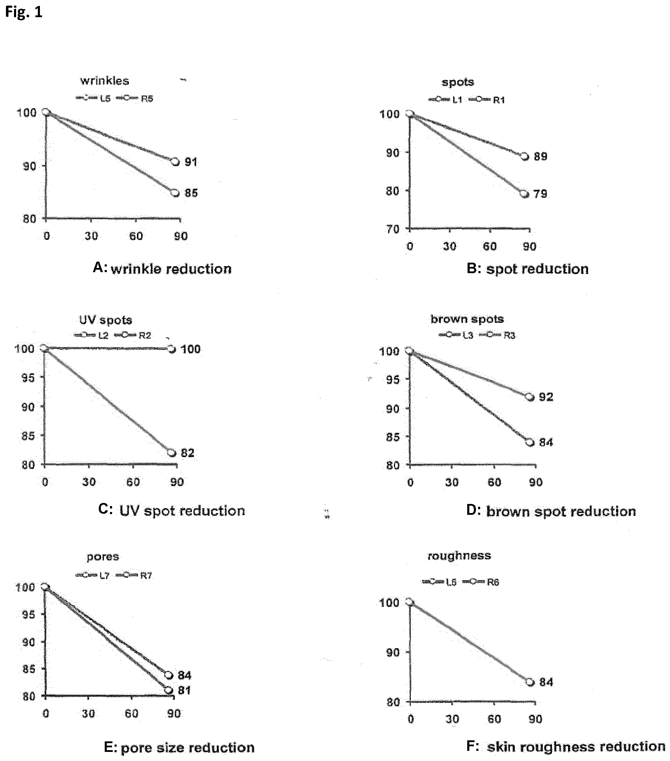

**Fig 1****.:** Anti-aging effects of selenium-chocolate (control; dark grey lines) and selenium chocolate with added coenzymes (product; light grey lines) after systemic application for 3 months. **A:** wrinkle reduction; **B:** spot reduction; **C:** UV spot reduction; **D:** brown spot reduction; **E:** pore size reduction; and **F:** skin roughness reduction.

### EXAMPLES

### Materials and Methods

### Cultivating cacao plants

The Cocoa plant is a small (4 to 8 m height) evergreen tree. In Peru, it is mainly cultivated in the valleys mainly as intercrop with Coconut. Our area under cultivation is being promoted by Swiss chocolate producing companies as contract farming; i.e. ELLY SWISS AG selected farmers which have contracts under the label FAIR TRADE COCOA (SPK cocoa).

Cocoa is the dried and fully fermented fatty seed of the cacao tree from which chocolate is made. "Cocoa" can often also refer to the drink commonly known as hot chocolate; cocoa powder, the dry powder made by grinding cocoa seeds and removing the cocoa butter from the dark, bitter cocoa solids; or it may refer to the combination of both cocoa powder and cocoa butter together. Cocoa can be grown up to 500 m above mean sea level. It requires a minimum of 90-100 mm rainfall per month with an annual rainfall of 1500-2000 mm. The plants need equitable climate with well distributed rainfall. If dry periods are prolonged, irrigation scheduling is necessary. The temperature range of 15°-39°C with optimum of 25°C is considered ideal. Cocoa requires deep and well drained soils. Poorly drained soil affects growth of plants. Majority of area under Cocoa cultivation is on clay loam and sandy loam soil. It grows well in the pH range of 6.5 to 7.0. Cocoa requires 100 g N (220 g urea), 40 g P₂O₅ (200 g rock phosphate) and 140 g K₂O (235 g muriate of potash) per year.

### Producing cacao seeds and cacao powder with increased selenium content

Cacao plants were cultivated as described in the preceding paragraph. However, one third of the fertilizer was applied with 1% per weight of different inorganic selenite salts in May - June and two third during September-October (see Table 1). The ripe fruits were harvested and processed to cacao powder and delivered to ELLY SWISS AG Switzerland. The selenium content was determined using graphite furnace atomic absorption spectrometry

### Chocolate with coenzymes (i.e. "product"):

78% dark selenium-chocolate was melted at 45°C, mixed with added coenzymes, and converted in an equipment into 5 g pieces of chocolate.

### Selenium and Coenzyme content in a 5 g bar:

25 µg Selenium in the chocolate (Control) and in the product (as antioxidant and cellular anti-aging element)

Coenzymes (only in the "product" but not in the "control"; expected positive effect on the body is indicated in brackets):
- retinolpalmitate 0.5 mg (cellular growth);
- calcitriol 12.5 µg (prevention of osteoporosis);
- phylloquinon 5.5 µg (blood coagulation);
- tocopherol 3.75 mg (muscle function, antioxidant); and
- ubiquinol 12.5 mg (oxygen and fat conversion into cellular energy: ATP)

### Suppliers:

Coenzymes: Sigma Aldrich; Merck; Vitaminaze Shop Germany
Chocolate: ELLY SWISS AG Switzerland
Rectangular dark chocolate bars: Chocolateria Schuh, Interlaken, Switzerland

### Administration scheme:

The 5 g bars were applied orally (2 x 5 g daily, morning and evening) over 3 months.

### Anti-aging measurements:

Visia-teint-analysis: Cosmetic Studio at ELLY SWISS Deutschland, Institut für Altersforschung Seeschloss, Seestrasse 2, D-17424 Seebad Heringsdorf, MV

### Results:

As the data in Table 1 below shows, different inorganic salts of selenium were taken up differently by the cocoa plants, the highest selenium content was achieved when using ammonium selenite. The cacao powder obtained from plants fertilized with ammonium selenite will be ideal to manufacture 5 g chocolate platelets containing 25 µg selenium.

**Table 1: Different selenium concentrations in cacao powder depending on the selenium salt used in the fertilizer**

| 1% Selenium was added in the fertilizer as | None | Ammonium selenite | Sodium selenite | Potassium selenite |
|---|---|---|---|---|
| Selenium concentration in the resulting cocoa powder [µg/g] | 0.3 ± 0.1 | 6.7 ± 0.5 | 3.2 ± 0.2 | 2.8 ± 0.3 |

The chocolate used in the experiments contained 54% cocoa butter (triglycerides), lipids, 11.5 % proteins, 9% cellulose, 7.5% starch, and pentosanes, 6% tannins, colours, 5% water, 2.6% minerals and salts, 2% organic acids and taste compounds, 1.% sugars, 1.2% theobromine and 0.2% caffeine, an ideal emulsifier for hydrophilic and hydrophobic active ingredients at low to moderate concentrations (µg to mg).

Signs of aging were measured after oral administration of 2 x 5 g rectangular bars of dark chocolate per day with 78% selenium-cocoa containing 50 µg selenium each without (control) or with (product): retinolpalmitate, calcitriol, phyllochinon, tocopherol and ubiquinol at daily recommended dose. One 5 g bar was taken orally in the morning, the other 5 g bar was taken in the evening.

The first chocolate containing natural selenoproteins was invented by Lisa Blümel and received from ELLY SWISS Switzerland. The Selenium cacao for the chocolate was produced in a farm near Ollantaytambo, SacredValley, Peru by adding 1% sodium selenite into three batches of fertilizer for the cocoa tree according to ELLY SWISS. The cacao powder contains a mixture of totally 6-8 µg, selenocysteine and selenomethionine per gram of cacao according to the Certificate of Analysis. The 78% dark chocolate contains 4-5 µg per gram.

The indicated selenium concentrations have been determined by atomic absorption.

The anti-aging effect was measured on facial skin (beauty comes from inside) on 2 groups (control and product) of 25 females and 20 males each between 45 and 60 years. The 6 major anti-aging parameters on skin were measured in the cosmetic studio of ELLY SWISS Germany, Seeschloss, 17424-Seebad Heringsdorf by Visia Laser scanning equipment at the beginning of the treatment and after 3 months. No side effects (irritation allergies, etc.) were observed in all patients in our face studies.

We defined a score consisting of all six investigated skin parameters to demonstrate the overall anti-aging effect on facial skin after systemic application of coenzyme mixes in chocolate. After three months, the coenzyme formulations show strong anti-aging activities. All individual skin-parameters (reduction of numbers of skin deficiencies) were reduced in this study providing the tool for an assumed high class anti-aging process internally, manifesting topically on skin anti-aging. The selenium chocolate as control already showed reduction for wrinkles, spots, brown spots and pore size (see Table 2 and Fig. 1A, 1B, 1D, and 1E). More reduction was measured with the product containing additional coenzymes for wrinkles, spots, UV spots, pore size and roughness (see Table 2 and Fig. 1A, 1B, 1C, 1E, and 1F). The results of brown spots were opposite (see Table 2 and Fig. 1D). The standard deviations were between 20 and 30% percent between the tested individuals in each of the six anti-aging parameters (Table 2).

The systemic activity inside the body was observed with 2 patients having diagnosed bad liver or bad kidney values, which disappeared completely (back to normal values) after three months systemic treatment. The improvement of the 6 specific skin parameters with the systemic (oral) treatments after 90 days is outstanding, including partial disappearances of wrinkles - not just a slight skin care reduction of wrinkle-depth.

This therapeutic diagnosis and the non therapeutic anti-aging measurements on the outside skin may lead to the conclusion that the systemic administration of coenzymes in selenium-containing chocolate is active in general on organs in the human body.

**Table 2: Anti-aging Results**

| A facial analysis of subjects was performed after systemic application for 3 months with the control (selenium-chocolate without added coenzymes) or product (selenium chocolate with added coenzymes). The table shows the average reduction of skin irregularities in percent. | | |
|---|---|---|
| Skin parameter | Control | Product |
| Wrinkles | 9 | 15 |
| Spots | 11 | 21 |
| UV Spots | 0 | 18 |
| Brown Spots | 16 | 8 |
| Pore size | 16 | 19 |
| Skin Roughness | 16 | 16 |

## Claims

1. A food composition having a selenium content of at least about 4 µg/g, and further comprising one or more isolated ingredients selected from the group consisting of retinyl palmitate, calcitriol, phylloquinone, tocopherol, and ubiquinol.

2. The food composition according to claim 1 having a selenium content in the range between about 4 µg/g and about 8 µg/g.

3. The food composition according to claim 1 or 2, wherein
(i) retinyl palmitate is present in the food composition in a concentration range between about 0.1 mg/g and about 0.2 mg/g; and/or
(ii) calcitriol is present in the food composition in a concentration range between about 2.5 µg/g and about 5 µg/g; and/or
(iii) phylloquinone is present in the food composition in a concentration range between about 1.1 µg/g and about 10 µg/g; and/or
(iv) tocopherol is present in the food composition in a concentration range between about 0.75 mg/g and about 1.25 mg/g; and/or
(v) ubiquinol is present in the food composition in a concentration range between about 2.5 mg/g and about 10 mg/g.

4. The food composition according to any one of claims 1 to 3, further comprising one or more isolated coenzymes selected from the group consisting of panthenol, biotin, riboflavin, NAD, cobalamine, niacin, and folic acid.

5. The food composition according to any one of claims 1 to 4, further comprising one or more isolated amino acids selected from the group consisting of histidine, leucine, isoleucine, valine, lysine, methionine, phenylalanine, threonine, and cysteine.

6. The food composition according to any one of claims 1 to 5, wherein the food composition is chocolate, preferably dark chocolate.

7. The food composition according to claim 6, wherein the chocolate is portioned as a chocolate bar of 5 grams or 10 grams.

8. A non-therapeutic use of the food composition according to any one of claims 1 to 7 for reversing, reducing or slowing one or more signs of aging in a subject.

9. The non-therapeutic use of claim 8, wherein the one or more signs of aging are selected from the group consisting of:
- wrinkles, in particular wrinkles in the face;
- spots;
- UV spots;
- brown spots;
- pore size; and
- skin roughness.

10. The non-therapeutic use of claim 8 or 9, wherein the food composition is to be administered at a dose of about 5 grams twice daily.

11. A method for producing cacao seeds with an enhanced selenium content, the method comprising:
(a) cultivating a cacao tree;
(b) fertilizing the tree with ammonium selenite;
(c) waiting until one or more cacao pods are ready for harvest;
(d) harvesting one more cacao pods; and
(e) isolating cacao seeds from the one or more harvested cacao pods.

12. A method for producing cacao mass with an enhanced selenium content, the method comprising the steps:
(i) carrying out the method according to claim 11; and
(ii) preparing cacao mass from the cacao seeds obtained in step (e).

13. A method for producing a chocolate with an enhanced selenium content, the method comprising the steps:
(A) carrying out the method according to claim 12; and
(B) preparing a chocolate using the cacao mass obtained in step (ii).

14. A chocolate produced by the method according to claim 13.
